# EUROPÄISCHE PATENTANMELDUNG

(11) **EP 1 262 795 A2**
(43) Veröffentlichungstag der Anmeldung: **04.12.2002**
(21) Anmeldenummer: 02010011.1
(22) Anmeldetag: 04.05.2002
(51) Int. Cl.: G01S 17/93

(54) **Verfahren zur Verbesserung der Sicht in Fahrzeugen**

(30) Priorität: 31.05.2001 DE 10126492
(71) Anmelder: DaimlerChrysler AG, 70567 Stuttgart (DE)
(72) Erfinder: Holz, Michael, 89250 Senden (DE); Weidel, Edgar, 89250 Senden (DE)

(57) **Zusammenfassung**

Die Erfindung betrifft ein Verfahren zur Verbesserung der Sicht in einem Fahrzeug, insbesondere bei Dunkelheit, schlechter Witterung und Nebel, bei dem Laserlicht mit einer Wellenlänge außerhalb des sichtbaren Spektrums in einen vorgegebenen Raumwinkelbereich abgestrahlt wird, der mittels einer Kamera beobachtet wird, deren Bilder einem Fahrer angezeigt werden. Das Laserlicht wird nur dann im wesentlichen kontinuierlich abgestrahlt, wenn die Scheinwerfer des Fahrzeuges in Betrieb sind und/oder wenn sich das Fahrzeug in Fahrt befindet. Auf diese Weise wird die Augensicherheit anderer Verkehrsteilnehmer auf eine besonders einfache Weise gewährleistet.

## Beschreibung

Die Erfindung betrifft ein Verfahren zur Verbesserung der Sicht in einem Fahrzeug, nach dem Oberbegriff von Patentanspruch 1.

Schlechte Sicht bei Nacht ist eine anstrengende und gefährliche Situation, die von vielen Fahrern gefürchtet wird. Als Folge der schlechten Sicht ist die Unfallhäufigkeit nachts deutlich höher als bei Fahrten bei Tag und guter Sicht. Insbesondere treten bei Nacht folgende Schwierigkeiten auf:
- Die Sichtweite mit Abblendlicht bei Gegenverkehr ist gering und wird von vielen Fahrern falsch eingeschätzt. Das führt zu einem späten Erkennen von unbeleuchteten Hindernissen, Fußgängern, Radfahrern ohne Licht und von Tieren und damit zu Unfällen.
- Durch die Scheinwerfer entgegenkommender Fahrzeuge und deren Reflexe vor allem bei nasser Fahrbahn wird der Fahrer geblendet, der Fahrer fährt kurzzeitig in ein schwarzes Loch. Besonders gefährdet sind nachtblinde und ältere Fahrer wegen ihrer geringeren Sehleistung.
- Bei Regen, Nebel und Schneetreiben können die Sichtverhältnisse nochmals deutlich schlechter sein.

Eine Verbesserung der Sicht bei Nacht wird durch ein optoelektronisches System erreicht, das in der DE 40 07 646 A1 dargelegt ist. Das System nimmt ein Videobild einer Verkehrsszene auf und stellt es dem Fahrer geeignet dar. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel.

Das System enthält zusätzlich zu den normalen Scheinwerfern einen Infrarotscheinwerfer, der im nahen Infrarot emittierende Laserdioden als Lichtquelle nutzt. Die Laserdioden werden gepulst betrieben. Eine CCD-Kamera zur Aufnahme des Videobildes ist im Dachbereich des Fahrzeuges untergebracht. Die CCD-Kamera besitzt einen elektronischen Verschluss, der mit den Laserdioden synchronisiert ist. Vor dem Kameraobjektiv ist ein optisches Bandpassfilter angebracht. Das Videobild wird dem Fahrer auf einem LCD-Display gezeigt.

Die Laser emittieren bei einer Wellenlänge von 810 nm im nahen Infrarot. Da das infrarote Licht für das menschliche Auge nahezu nicht sichtbar ist und die verwendete Lichtleistung nicht höher als bei einem konventionellen Fahrzeugscheinwerfer ist, geht man bisher davon aus, dass permanent aufgeblendet beleuchtet werden kann, ohne dass andere Verkehrsteilnehmer gefährdet werden.

Dennoch ist es unter Sicherheitsaspekten wünschenswert, jegliche auch nur irgendwie denkbare Gefährdung anderer Verkehrsteilnehmer auszuschließen.

Der Erfindung liegt die Aufgabe zugrunde, die Augensicherheit der Verkehrsteilnehmer auf eine besonders einfache Weise zuverlässig zu gewährleisten.

Diese Aufgabe wird bei einem Verfahren nach dem Oberbegriff von Patentanspruch 1 durch dessen kennzeichnende Merkmale gelöst.

Die Informationen, ob die normalen Scheinwerfer des Fahrzeuges in Betrieb sind bzw. ob sich das Fahrzeug sich in Fahrt befindet, stehen in modernen Kraftfahrzeugen, die über einen Bordrechner verfügen, automatisch zur Verfügung. Andernfalls können sie mittels sehr einfacher Elektrik oder Elektronik gewonnen werden.

Aufgrund dieser Informationen werden ein oder mehrere Laserscheinwerfer erfindungsgemäß nur dann kontinuierlich betrieben, wenn auch die Scheinwerfer des Fahrzeuges in Betrieb sind, insbesondere wenn das Fern- oder Abblendlicht eingeschaltet ist, oder wenn sich das Fahrzeug in Fahrt befindet oder, wenn sowohl die Scheinwerfer in Betrieb sind als auch das Fahrzeug sich in Fahrt befindet.

Der Betrieb der Scheinwerfer ist ein zuverlässiges Indiz dafür, dass die Nachtsichteinrichtung tatsächlich benötigt wird. Werden die Scheinwerfer ausgeschaltet, wird auch die Nachtsichteinrichtung abgeschaltet, so dass die Laserscheinwerfer keinerlei Gefahr mehr darstellen können.

Wenn man die Aktivierung bzw. Deaktivierung der Laserscheinwerfer zusätzlich oder alternativ davon abhängig macht, ob sich das Fahrzeug sich in Fahrt befindet, insbesondere in Fahrtrichtung, wird außerdem die Situation vermieden, dass irgendeine unbewegliche Person, etwa ein stillstehender Fußgänger oder Zweiradfahrer, der die Vorderseite des Fahrzeuges im Blickfeld hat, von einer ruhenden Laserlichtquelle getroffen wird, einer Situation, die aufgrund der Kohärenz des Laserlichtes bei größerer Einwirkungsdauer eine reale Gefährdung bedeuten könnte. Andererseits kann während der Fahrt allenfalls wenige Millisekunden lang Laserlicht auf die ein und dieselbe Stelle der Netzhaut eines Verkehrsteilnehmers fallen, der sich in einem sicherheitsrelevanten Abstand von dem Fahrzeug befindet, so dass die Augensicherheit unter allen denkbaren Umständen gewährleistet ist.

Weitere wesentliche Vorteile der Erfindung liegen darin, dass die bedarfsoptimierten Betriebszeiten eine Energieeinsparung und außerdem eine Schonung der Laserlichtquellen, die eine begrenzte Lebensdauer haben, zur Folge haben.

In einer bevorzugten Ausführungsform wird das Laserlicht von zwei oder mehr verschiedenen Typen von Laserscheinwerfern abgestrahlt, die jeweils unterschiedliche Teile des zu beobachtenden Raumwinkelbereiches ausleuchten. Dies hat den Vorteil, dass der Typ der Laserlichtquelle, die Lichtleistung, die Optik und ggf. die Wellenlänge der jeweiligen Laserscheinwerfer optimal an den jeweiligen Beleuchtungszweck angepasst werden kann, z.B. für einen "Straßenscheinwerfer" 3 und einen "Personenscheinwerfer" 2. Durch geeignete Wahl der von den verschiedenen Typen von Laserscheinwerfern ausgeleuchteten Teile des zu beobachtenden Raumwinkelbereiches und deren Überschneidungsbereiche kann man die Gesamt-Abstrahlcharakteristik auf sehr einfache Weise optimieren.

In einer weiteren bevorzugten Ausführungsform wird das Laserlicht an einer von der Vorderseite des Fahrzeuges entfernten Stelle erzeugt und durch einen Lichtleiter zur Vorderseite des Fahrzeuges geleitet, wo es von einer geeigneten Optik abgestrahlt wird. Dies hat den Vorteil, dass die empfindliche Laserlichtquelle an irgendeiner geschützten Stelle eingebaut werden kann, zum Beispiel innerhalb der Elektronik für das Nachtsichtsystem. Vorne am Fahrzeug muss sich nur die robustere Lichtaustrittsoptik befinden.

Die Verwendung von Lichtleitern hat außerdem den Vorteil, dass diese auf einfache Weise mit Verzweigungen versehen werden können, entweder um mehrere Lichtaustrittsoptiken mit Laserlicht aus einer gemeinsamen Quelle zu versorgen oder um das Licht mehrerer Laserlichtquellen, die auch verschiedene Wellenlängen haben können, an eine gemeinsame Lichtaustrittsoptik zu leiten.

In einer weiteren bevorzugten Ausführungsform werden dem Laserlicht Informationen zur Kommunikation zwischen Fahrzeugen aufmoduliert, die mittels eines zusätzlichen Detektors oder der Kamera empfangen werden können. Der Vorteil dieser Ausführungsform der Erfindung liegt aber in der gemeinsamen Nutzung von wesentlichen Teilen des Nachtsichtsystems sowohl zur Sichtverbesserung als auch zur Kommunikation.

Wenn die Kamera im Dachbereich des Fahrzeuges hinter der Frontscheibe montiert ist, liegt normalerweise ein von einem Scheibenwischer des Fahrzeuges überstrichener Bereich der Frontscheibe im Blickfeld der Kamera. In diesem Fall werden in einer bevorzugten Ausführungsform der Erfindung die Kamera und der Scheibenwischer synchron miteinander betrieben, das heißt, entweder wird der Betrieb der Kamera an den Scheibenwischer angepasst, indem sie nur bei freiem Blickfeld betrieben wird bzw. nur in diesem Fall das Videobild an die Anzeigeoptik weitergeleitet und auf dieser wiedergegeben wird, oder die Kamera wird in voreingestellten Intervallen betrieben und der Scheibenwischer wird so betrieben, dass er nur jeweils in den Betriebspausen der Kamera in deren Blickfeld kommt.

Wenn die Laserscheinwerfer bzw. die Kamera oder Anzeigeoptik in Intervallen betrieben werden, sei es bei stillstehendem Fahrzeug oder während der Phasen, in denen sich der Scheibenwischer im Blickfeld der Kamera befindet, kann das jeweils zuletzt angezeigte Bild "eingefroren" werden, damit der Fahrer nicht durch ein fehlendes Bild irritiert wird.

Weitere Merkmale und Vorteile der Erfindung ergeben sich aus den Unteransprüchen und aus der folgenden Beschreibung von Ausführungsbeispielen eines Systems zur Verbesserung der Sicht in Fahrzeugen.

Ein Kraftfahrzeug enthält zwei oder mehr in Fahrtrichtung strahlende Infrarot-Laserscheinwerfer. Jeder Laserscheinwerfer enthält einen oder mehrere Infrarotlaser, insbesondere Laserdioden, die im nahen Infrarot arbeiten. Alternativ kann das System auch in einem anderen Spektralbereich außerhalb des sichtbaren Spektrums arbeiten, z.B. im fernen Infrarot oder mit ultraviolettem Licht.

Wenn jeder Laserscheinwerfer nur einen Laser enthält, gibt es verschiedene Möglichkeiten, den zu beobachtenden Raumwinkelbereich vor dem Fahrzeug auszuleuchten:
a) gleichzeitige Ausleuchtung des gesamten Bereiches durch zweidimensionale Strahlaufweitung des Laserstrahls
b) Aufweitung nur in einer Richtung bei gleichzeitiger enger Bündelung in der orthogonalen zweiten Richtung und Schwenken (scan) des ausgeleuchteten flachen Raumwinkelausschnitts in der zweiten Richtung
c) Schwenken des gesamten Laserstrahls in zwei Dimensionen zur abtastenden Ausleuchtung des gesamten Raumwinkelbereiches.

Alternativ besteht die Möglichkeit, ein Array von Laserdioden, die gemeinsam den gesamten Raumwinkelbereich ausleuchten, als Laserscheinwerfer zu verwenden.

Im Ausführungsbeispiel werden zwei verschiedene Typen von Laserscheinwerfern verwendet, die jeweils unterschiedliche Teile des zu beobachtenden Raumwinkelbereiches ausleuchten. Ein erster Typ Laserscheinwerfer, entweder ein Einzelscheinwerfer oder auch mehrere, z.B. zwei Laserscheinwerfer 3, die jeweils in der Nähe der konventionellen Scheinwerfer angebracht sind, bestrahlt ähnlich wie bei konventionellem Fernlicht im wesentlichen die vor dem Fahrzeug liegende Straße 1, d.h. einen relativ engen Ausschnitt aus dem zu beobachtenden Raumwinkelbereich. Ein zweiter Typ Laserscheinwerfer, ebenfalls entweder ein Einzelscheinwerfer oder mehrere, z.B. zwei Laserscheinwerfer 2, die jeweils in der Nähe der konventionellen Scheinwerfer angebracht sind, bestrahlt den gerade beobachteten Raumwinkelbereich mit Schwergewichten auf einem Bereich nahe vor dem Fahrzeug, d.h. vom Fahrzeug aus schräg nach unten, sowie - bedarfsweise asymmetrisch - schräg zur Seite. Insoweit hat der zweite Typ Laserscheinwerfer eine Abstrahlcharakteristik, die konventionellem Abblendlicht ähnlich ist, aber wegen der fehlenden Blendwirkung weiter nach oben gerichtet sein kann, um irgendwelche am Straßenrand befindlichen Personen zuverlässig zu erfassen.

Die Verwendung von zwei verschiedenen Typen von Laserscheinwerfern hat den Vorteil, dass die Laser und die Optik der einzelnen Laserscheinwerfer für den jeweiligen Einsatzzweck optimiert werden kann. Für einen "Straßenscheinwerfer" 3 kommt man z.B. mit einer einzigen Laserdiode ohne jegliche Optik zur Strahlaufweitung aus, wenn die Eigendivergenz der Laserdiode gerade den für "Fernlicht" passenden Wert hat. Andererseits müssen an die Kohärenz des Lasers für einen "Personenscheinwerfer" 2 und dessen Optik zur Strahlaufweitung keine hohen Ansprüche gestellt werden. Ferner können die Lichtleistung und eventuell auch die Wellenlänge der zwei Typen von Laserscheinwerfern optimal an den jeweiligen Einsatzzweck angepasst werden.

Das Laserlicht kann, muss aber nicht wie bei konventionellen Scheinwerfern unmittelbar vorne am Fahrzeug erzeugt werden. In einem Ausführungsbeispiel werden eine oder mehrere Laserlichtquellen in der Fahrzeugelektronik oder an einer anderen geschützten Stelle untergebracht, von der aus das Laserlicht durch Lichtleiter zu einer oder mehreren Lichtaustrittsoptiken geleitet wird, die den oder die Laserscheinwerfer bilden. Die Lichtleiter können sich auch verzweigen, so dass zum Beispiel ein Laser mehrere Laserscheinwerfer versorgen kann. Oder man kann das Licht mehrerer Laser, die für die vorher beschriebene Optimierung der Beleuchtung auch verschiedene Wellenlängen haben können, über sich vereinigende oder optisch miteinander gekoppelte Lichtleiter einem oder mehreren Laserscheinwerfern zuführen.

Das Kraftfahrzeug enthält weiterhin eine Kamera als Bildsensor, die so angeordnet ist, dass sie die Verkehrsszene aufnimmt, die sich in Fahrtrichtung darbietet. Die Kamera ist zumindest für das von der Umgebung reflektierte Licht des oder der Laserscheinwerfer empfindlich, in diesem Ausführungsbeispiel im nahen Infrarot. Das von der Kamera aufgenommene Videobild wird dem Fahrer auf einer Anzeigeoptik im Fahrzeug angezeigt, die zum Beispiel ein Display oben auf der Armaturentafel oder ein Projektor zum Einspiegeln des Bildes in einen Bereich der Frontscheibe nach Art eines Head-up-Displays ist.

Die Kamera ist unmittelbar hinter der Frontscheibe in der Nähe des Rückspiegels angebracht, wie z.B. in der GB 2271139 A1 beschrieben. Wie darin beschrieben, enthält die Frontscheibe an dieser Stelle einen Einsatz aus einem IR-durchlässigen Material. In dem hier beschriebenen Ausführungsbeispiel wird eine Frontscheibe aus homogenem Material verwendet, die mit einer Infrarot-abweisenden Folie zur Verminderung der Wärmeeinstrahlung bedeckt ist. Diese Folie ist im Bereich des Blickfeldes der Kamera ausgespart, um Infrarotlicht für die Kamera durchzulassen, wobei die geringe IR-Absorption im Glas selbst in Kauf genommen wird.

Der vertikale Abstand zwischen dem oder den konventionellen Scheinwerfern und den Laserscheinwerfern einerseits und der Kamera andererseits sollte so groß wie möglich sein, damit die Kamera durch den Lichtschleier, das atmosphärische Streulicht, der Scheinwerfer schauen kann. In dieser Hinsicht ist eine Anordnung in Höhe des Rückspiegels, wo man heute z.B. auch einen Regensensor anbringt, von Vorteil, kann aber je nach Fahrzeugdesign möglicherweise noch verbessert werden, indem man die Kamera immer so weit oben wie möglich anbringt.

Bei der oben beschriebenen Anordnung der Kamera hinter der Frontscheibe wird man außerdem darauf achten, das der im Blickfeld der Kamera liegende Bereich der Frontscheibe im Arbeitsbereich mindestens eines Scheibenwischers liegt, damit die Kamera auch bei Regen klare Sicht hat. Im Ausführungsbeispiel werden die Kamera und der Scheibenwischer synchron miteinander betrieben, zum Beispiel indem jeweils in dem Augenblick, in dem sich der Scheibenwischer im Blickfeld der Kamera befindet, nicht das aktuelle Bild, sondern das zuletzt übertragene Bild auf der Anzeigeoptik im Fahrzeug wiedergegeben wird. Das ausgeblendete Zeitintervall ist zu kurz, um vom Fahrer bemerkt zu werden.

Wenn eine Anordnung der Kamera ganz weit oben am Fahrzeug aus irgendwelchen Gründen nicht möglich oder erwünscht ist, kann die Kamera unauffällig und ohne Behinderung durch die Frontscheibe in einem der Außenspiegel untergebracht werden. Wird im zweiten Außenspiegel eine weitere Kamera untergebracht, wird Stereosehen und somit eine Entfernungsbestimmung von Objekten möglich, ohne dass man einen separaten Entfernungsmesser benötigt.

In einem anderen Ausführungsbeispiel ist die Kamera nicht nur in dem Wellenlängenbereich des oder der Laserscheinwerfer empfindlich, sondern auch im sichtbaren Spektrum, wie es zum Beispiel bei einem CCD-Sensor der Fall ist, wenn man das ansonsten übliche Filter für sichtbares Licht weglässt oder deaktivierbar macht. Dadurch kann die Kamera zusätzlich zu ihrer Verwendung bei schlechter Sicht auch als Tageslichtkamera verwendet werden, zum Beispiel um Bilder der aktuellen Verkehrsszene aufzunehmen, anhand derer eine automatische Erkennung von Fahrbahnrändern, Verkehrszeichen oder anderen sicherheitsrelevanten Details durchgeführt wird. Die erkannten Details werden daraufhin ausgewertet, ob irgendeine Gefahrensituation vorliegt, beispielsweise durch Abkommen von der Fahrbahn oder Überschreitung der zulässigen Geschwindigkeit, worauf der Fahrer dann durch akustische oder optische Warnsignale hingewiesen wird.

Wenn die für IR-Nachtsicht nötige Empfindlichkeit der Kamera für deren Verwendung als Tageslichtkamera zu hoch ist, wird sie mit einer automatisch einstellbaren Irisblende versehen, die bei Tag so weit geschlossen wird, dass die Kamera nicht überbelichtet wird. Es gibt aber auch Kameras, deren Lichtempfindlichkeit mit Hilfe ihrer Elektronik auf den jeweils nötigen Wert eingestellt werden kann, so dass man ohne irgendeine Mechanik auskommt.

In einem weiteren Ausführungsbeispiel werden der oder die Laserscheinwerfer und die Kamera nicht nur für das oben beschriebene System zur Verbesserung der Sicht bei Dunkelheit, schlechter Witterung und Nebel verwendet, sondern gleichzeitig von einem System zur Kommunikation mit anderen Fahrzeugen verwendet, zum Beispiel, um laufend Statusinformationen zu senden, um die Fahrer von vorausfahrenden oder entgegenkommenden Fahrzeugen vor irgendwelchen Gefahrensituationen zu warnen oder um Fahrzeuge, die mit eingeschaltetem Fernlicht entgegenkommen, automatisch zu veranlassen, auf Abblendlicht umzuschalten.

Zu diesem Zweck wird das eigentlich nur zur Sichtverbesserung abgestrahlte Laserlicht mit den zu übertragenden Informationen moduliert, und in einem Fahrzeug, das ebenfalls über die beschriebene Kamera und/oder irgendeinen anderen IR-Sensor verfügt und in die Reichweite des Laserlichtes gelangt, können die Informationen aus dem Laserlicht zurückgewonnen und ausgewertet werden.

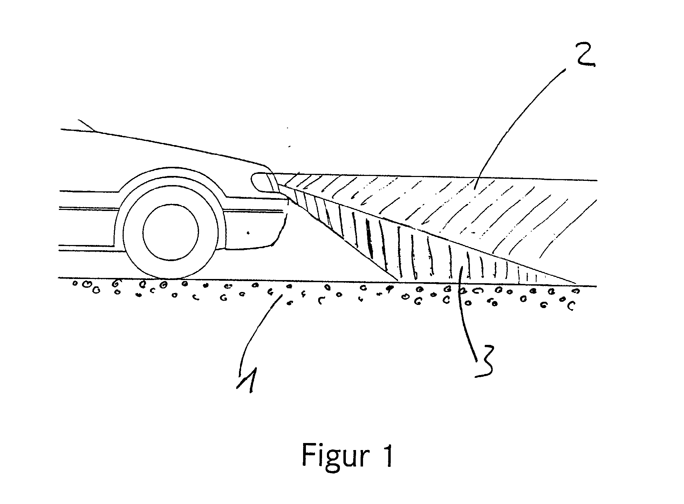

## Patentansprüche

1. Verfahren zur Verbesserung der Sicht in einem Fahrzeug, insbesondere bei Dunkelheit, schlechter Witterung und Nebel, bei dem Laserlicht mit einer Wellenlänge außerhalb des sichtbaren Spektrums in einen vorgegebenen Raumwinkelbereich abgestrahlt wird, der mittels einer Kamera beobachtet wird, deren Bilder einem Fahrer angezeigt werden, **dadurch gekennzeichnet, dass** das Laserlicht nur dann im wesentlichen kontinuierlich abgestrahlt wird, wenn die Scheinwerfer des Fahrzeuges in Betrieb sind und/oder wenn sich das Fahrzeug in Fahrt befindet.

2. Verfahren nach Anspruch 1, **dadurch gekennzeichnet, dass**, wenn sich das Fahrzeug im Stand befindet, das Laserlicht in aufeinander folgenden Zeitintervallen abgestrahlt wird, deren zeitliche Abstände wesentlich größer als ihre Dauer sind.

3. Verfahren nach Anspruch 1 oder 2, **dadurch gekennzeichnet, dass** das Laserlicht von mindestens zwei verschiedenen Typen von Laserscheinwerfern 2 und 3 abgestrahlt wird, die jeweils unterschiedliche Teile des zu beobachtenden Raumwinkelbereiches ausleuchten.

4. Verfahren nach einem der vorhergehenden Ansprüche, **dadurch gekennzeichnet, dass** das Laserlicht an einer von der Vorderseite des Fahrzeuges entfernten Stelle erzeugt und durch einen oder mehrere Lichtleiter zur Vorderseite des Fahrzeuges geleitet wird.

5. Verfahren nach einem der vorhergehenden Ansprüche, **dadurch gekennzeichnet, dass** dem Laserlicht Informationen zur Kommunikation mit anderen Fahrzeugen aufmoduliert werden.

6. Verfahren nach einem der vorhergehenden Ansprüche, **dadurch gekennzeichnet, dass** ein von einem Scheibenwischer des Fahrzeuges überstrichener Bereich der Frontscheibe des Fahrzeuges im Blickfeld der Kamera liegt und dass die Kamera bzw. eine Anzeigeoptik im Fahrzeug und der Scheibenwischer synchron miteinander betrieben werden.
